# EUROPEAN PATENT SPECIFICATION

(11) **EP 4 219 194 B1**
(45) Date of publication and mention of the grant of the patent: **06.08.2025**
(21) Application number: 23152278.0
(22) Date of filing: 18.01.2023
(51) Int. Cl.: B60C 11/03, B60C 11/04, B60C 11/12, B60C 11/13

(54) **PNEUMATIC TIRE**
LUFTREIFEN
PNEUMATIQUE

(30) Priority: 27.01.2022 JP 2022010901
(43) Date of publication of application: 02.08.2023
(73) Proprietor: TOYO TIRE CORPORATION, Itami-shi, Hyogo 6640847 (JP)
(72) Inventor: Miyazaki, Tetsuji, Itami-shi, 6640847 (JP)
(74) Representative: Balder IP Law, S.L.

(56) References cited:
- EP-A1- 3 321 104
- EP-A1- 3 822 093
- EP-A1- 4 173 848
- JP-A- H01 132 406

## Description

### BACKGROUND

### Technical Field

The present invention generally relates to a pneumatic tire, and more particularly to a pneumatic tire provided with a tread including a plurality of lands and a sipe formed in at least one of the lands.

### Related Art

There has been conventionally known a pneumatic tire provided with a tread including a plurality of circumferential grooves extending in a tire circumferential direction and a plurality of lands partitioned by the plurality of circumferential grooves in a tire width direction, sipes being formed in the plurality of lands (for example, see International Publication No. WO 2016/125814). In the pneumatic tire disclosed in International Publication No. WO 2016/125814, a chamfer is formed between an opening end on one side or each side in the width direction of the sipe, and a ground contact surface.

In the pneumatic tire disclosed in International Publication No. WO 2016/125814, a mold forming a shape of the tread including the chamfer and the sipe includes a projection for forming the sipe and a main body for forming a portion including the chamfer, the projection and the main body being made of different members in some cases. At this time, when, after forming the shape of the tread, blast cleaning involving blowing out high-pressure gas, such as dry-ice cleaning, is applied to the mold, a portion in the main body in which the chamfer is formed may be deformed and turned up from the projection. Depending on the cleaning method for the mold, this may result in a reduction in the durability of the mold. In addition, in the tire, there is room for improvement in terms of improving the drainage efficiency.

The European patent Application EP-3.822.093 A1 refers to a tire having a tread portion axially divided into two shoulder land regions, two middle land regions and one crown land region by two shoulder circumferential grooves and two crown circumferential grooves.

The European patent Application EP-3.321.104 A1 refers to a tire including a tread portion with a designated install direction to a vehicle to have an inboard tread edge, and an outboard tread edge.

Japanese patent Application JP H01 132404 A relates to a tire having shallow grooves with cipes on the grove bottoms, and blocks in the direction of the cipes cross the circumferential direction of the tire.

The European patent Application EP-4.173.848 A1, which is prior art according to Art. 54(3) EPC, discloses a tire including a tread portion including a first shoulder land portion provided with first shoulder lateral grooves extending from a first tread edge to a first shoulder circumferential groove, a second shoulder land portion provided with second shoulder lateral grooves extending from a second tread edge and terminating within the second shoulder land portion.

### SUMMARY

It is a purpose of the present invention to provide a pneumatic tire that can provide improved durability of a mold even when blast cleaning involving blowing out high-pressure gas is applied to the mold forming a shape of the tire, and that makes it possible to improve drainage properties during use of the tire.

A pneumatic tire according to the present invention comprises a tread including a plurality of lands and a sipe formed in at least one of the lands, wherein an inclined surface is formed between an opening end on at least one side in a width direction of the sipe and a ground contact surface, the inclined surface having a linear shape in cross section and continuing from the ground contact surface, and an intermediate surface is formed between the inclined surface and the sipe, the intermediate surface having an inclination angle with respect to the ground contact surface of 0 degrees or having an inclination angle with respect to the ground contact surface that is smaller than an inclination angle of the inclined surface with respect to the ground contact surface.

According to the above-described pneumatic tire, in a mold for forming a shape of a tire, in a case where a projection for forming a sipe and a main body for forming a portion including an inclined surface are formed of different members, a top surface is provided at a portion in the main body coming in contact with the projection, the top surface corresponding to an intermediate surface and coming in contact with the projection at an angle close to a right angle to the projection. The top surface contacts a side surface of the projection at an angle smaller than that without the intermediate surface on an interior space side of the mold even when blast cleaning involving blowing out high-pressure gas is applied to the mold. Therefore, the main body can be prevented from being deformed turning up from the protrusion. Accordingly, the durability of the mold can be improved. In addition, a water accommodating region in the groove of the tire is increased by the formation of the intermediate surface, whereby the drainage properties during use of the tire can be improved.

According to the pneumatic tire according to the present disclosure, the durability of a mold can be improved even when blast cleaning involving blowing out high-pressure gas is applied to the mold forming a shape of the tire, and the drainage properties during use of the tire can be improved.

### BRIEF DESCRIPTION OF THE DRAWINGS

Embodiment(s) of the present invention will be described based on the following figures, wherein:
FIG. 1 is a perspective view of a pneumatic tire according to an example of an embodiment;
FIG. 2 is a plan view of a portion A of FIG. 1;
FIG. 3 is an enlarged perspective view when a portion B of FIG. 2 is viewed from an end on a circumferential primary groove side of a first groove;
FIG. 4 is a diagram illustrating a cross section taken along a line C-C of FIG. 2;
FIG. 5 is an enlarged perspective view when a portion D of FIG. 2 is viewed from an end on a circumferential primary groove side of a second groove;
FIG. 6 is a diagram illustrating a cross section taken along a line E-E of FIG. 5;
FIG. 7 is an enlarged perspective view of a portion F of Fig. 1;
FIG. 8 is a schematic sectional view of a portion forming the first groove of FIG. 3 in a tire vulcanization mold for forming a tread of the tire of FIG. 1; and
FIG. 9 is a schematic sectional view of a portion forming a groove in a mold for forming a tread of a tire according to a comparative example.
FIG. 10 is a diagram corresponding to FIG.4 according to another example of an embodiment;.

### DESCRIPTION OF EXEMPLARY EMBODIMENTS

Hereinafter, a pneumatic tire according to an example of an embodiment of the present invention will be described in detail with reference to the drawings. The embodiment described below is merely exemplary, and the present invention is not limited to the following embodiment.

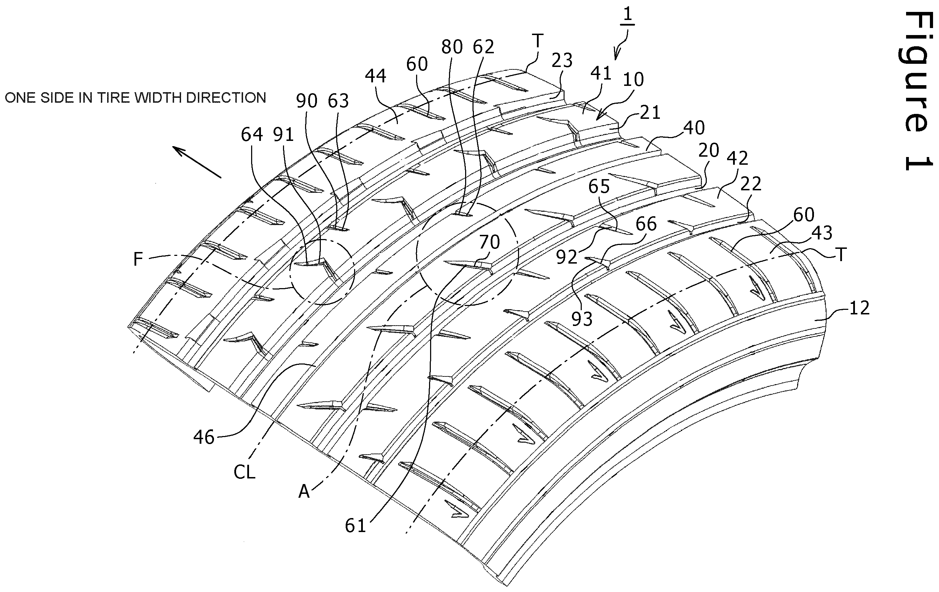

FIG. 1 is a perspective view of a pneumatic tire 1 according to an example of an embodiment. As illustrated in FIG. 1, the pneumatic tire 1 includes a tread 10 which is a portion coming in contact with a road surface. Hereinafter, the "pneumatic tire 1" is referred to as the "tire 1". The tread 10 has a tread pattern including a plurality of lands, and is formed into an annular shape along a tire circumferential direction.

The tread 10 includes lands 40, 41, 42, 43, and 44 partitioned by four circumferential primary grooves 20, 21, 22, and 23, for example. The land is a projection projecting outwardly in a tire radial direction from a reference surface of the tread 10. The "reference surface" refers to a virtual surface along a bottom surface of the deepest circumferential primary groove, which means an outer circumferential surface of the tread 10 where no land exists. The tread 10 has, as the above-described lands, a center land 40 including a center CL in a tire width direction, mediate lands 41 and 42 provided on both sides in the tire width direction of the center land 40 across the first circumferential primary grooves 20 and 21, respectively, and shoulder lands 43 and 44 provided on outer sides in the tire width direction of the two mediate lands 41 and 42 across the second circumferential primary grooves 22 and 23, respectively, the center land 40, the mediate lands 41 and 42, and the shoulder lands 43 and 44 being partitioned by the four circumferential primary grooves 20, 21, 22, and 23.

Each of the center land 40, the two mediate lands 41, and 42, and the two shoulder lands 43 and 44 is continuously formed into a rib shape along the whole circumference in the tire circumferential direction.

The tire 1 includes side walls 12 provided more toward the outer sides in the tire width direction than the tread 10 and bulging most outwardly in the tire width direction, and beads (not illustrated) to be fixed to a rim of a wheel. The side walls 12 and the beads are formed into an annular shape along the tire circumferential direction. The side walls 12 extend from both ends in the width direction of the tread 10 toward an inner side in the tire radial direction.

The tire 1 is a pneumatic tire to be filled with air at a predetermined pressure. The tread 10 and the side walls 12 are made of different kinds of rubber, for example.

Each of the shoulder lands 43 and 44 arranged at both ends in the width direction of the tread 10 includes a ground contact end T which is an end on the outer side in the tire width direction of a ground contact surface. The end in the tire width direction of each of the shoulder lands 43 and 44 protrudes outwardly in the tire width direction more than the ground contact end T and is gradually curved inwardly in the tire radial direction so that the outer circumferential surface bulges toward the outer side. The portion protruding outwardly in the tire width direction more than the ground contact end T of each of the shoulder lands 43 and 44 is referred to as a buttress.

The "ground contact ends T" refers to both ends in the tire width direction of a region contacting a flat road surface when a load which is 70% of a regular load at a regular internal pressure is applied in a state in which the tire 1 which is yet to be used is mounted on a regular rim and is filled with air to achieve the regular internal pressure.

Here, the "regular rim" is a rim defined by a tire standard, and refers to a "standard rim" in the case of JATMA, refers to a "Design Rim" in the case of TRA, and refers to a "Measuring Rim" in the case of ETRTO. The "regular internal pressure" refers to a "maximum air pressure" in the case of JATMA, refers to a maximum value described in the Table of "TIRE LOAD LIMITS AT VARIOUS COLD INFLATION PRESSURES", and refers to an "INFLATION PRESSURE" in the case of ETRTO. The "regular load" refers to a "maximum load capability" in the case of JATMA, a maximum value described in the Table "TIRE LOAD LIMITS AT VARIOUS COLD INFLATION PRESSURES", and a "LOAD CAPACITY" in the case of ETRTO.

Although not illustrated, the tire 1 includes a carcass, a belt, and an inner liner. The carcass is a cord layer coated with rubber, and forms a skeleton of the tire 1 which endures a load, a shock, an air pressure, or the like. The belt is a reinforcement band arranged between the rubber constituting the tread 10 and the carcass. The belt firmly tightens the carcass to improve the rigidity of the tire 1. The inner liner is a rubber layer provided on the inner circumferential surface of the carcass and maintains the air pressure of the tire 1. The bead has a bead core and a bead filler.

At a plurality of positions in the tire circumferential direction on each of shoulder lands 43 and 44, a plurality of lug grooves 60 are formed to extend in a substantially tire width direction. An inner end of each lug groove 60 in the tire width direction terminates within the shoulder lands 43 and 44, and is not opened to the wall surfaces of the shoulder lands 43 and 44. The formation of such lug grooves 60 enables improvement in drainage properties toward the outer sides in the tire width direction.

In the ground contact surfaces of the center land 40 and the mediate lands 41 and 42, a plurality of sipes 61, 62, 63, 64, 65, and 66 are formed to extend in a direction inclined with respect to the tire width direction, or are formed into a V shape. The sipes 61, 62, 63, 64, 65, and 66 each improve an edge effect to scrape snow and ice, and have an effect to achieve superior braking capability and maneuvering stability on snowy and icy road surfaces.

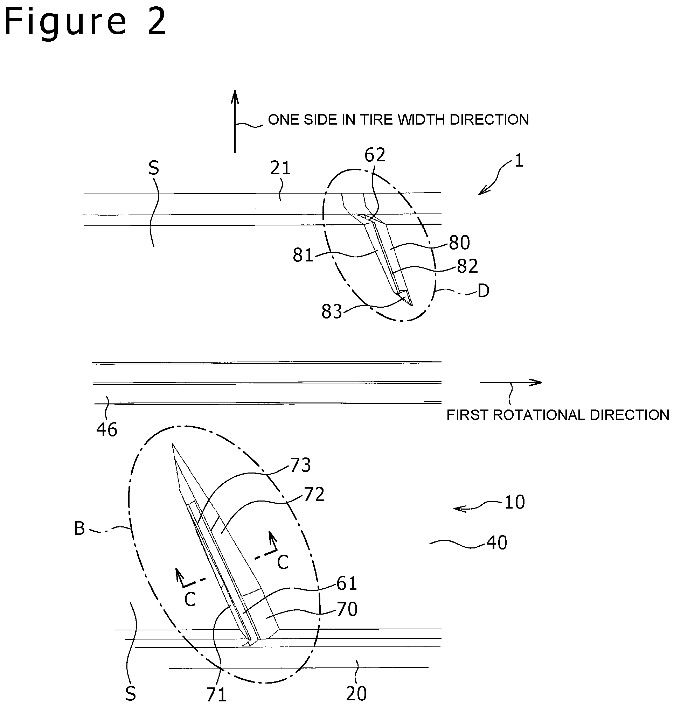

In the case illustrated in FIG. 2, the sipes 61 to 63, 65, and 66 inclined with respect to the tire width direction are formed in the center land 40 and each of the mediate lands 41 and 42, and a V-shaped sipe 64 is formed in the mediate land 41 on one side in the tire width direction.

Note that in the center land 40, a circumferential secondary groove 46 extending in the tire circumferential direction is formed, which has a width smaller than that of each of the circumferential primary grooves 20, 21, 22, and 23.

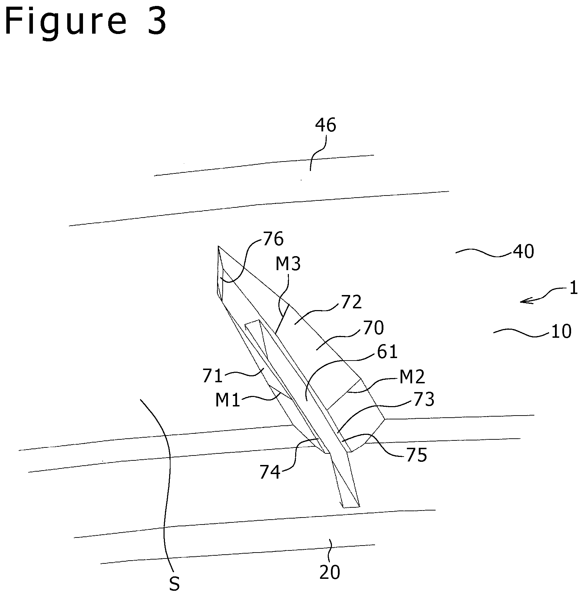

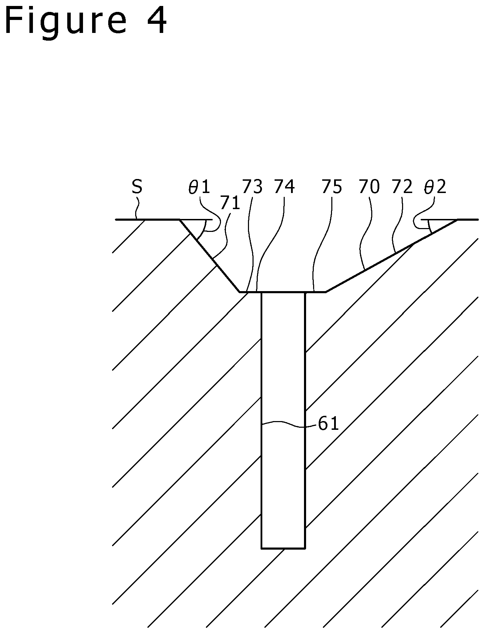

Hereinafter, as examples of the sipes inclined with respect to the tire width direction, the first and second sipes 61 and 62 in the center land 40 will be mainly described, and as an example of the sipe formed into a V shape, a fourth sipe 64 will be described, which is formed in the mediate land 41 on one side in the tire width direction. FIG. 2 is a plan view of a portion A of FIG. 1. FIG. 3 is an enlarged perspective view when a portion B of FIG. 2 is viewed from an end on a circumferential primary groove 20 side of a first groove 70. FIG. 4 is a diagram illustrating a cross section taken along a line C-C of FIG. 2.

A plurality of first sipes 61 are formed on the first circumferential primary groove 20 side which is one side of the center land 40. A plurality of second sipes 62 are formed on the first circumferential primary groove 21 side which is the other side of the center land 40. The plurality of first sipes 61 are formed separately from each other at a plurality of positions in the tire circumferential direction. The plurality of second sipes 62 are formed separately from each other at a plurality of positions different from those of the first sipes 61 in the tire circumferential direction. In the center land 40, an inner end in the tire width direction of each of the first sipes 61 and the second sipes 62 is terminated at a position where the inner end does not reach the circumferential secondary groove 46, the inner end being one end in the longitudinal direction of each of the first sipes 61 and the second sipes 62. When viewed from an outer side in the tire radial direction, the first sipe 61 is longer than the second sipe 62.

The first sipe 61 is included in the first groove 70 extending in the direction inclined with respect to the tire width direction. In the first groove 70, an opening end when viewed from the outer side in the tire radial direction is tapered in a substantially triangular shape. The first groove 70 includes the first sipe 61, two first inclined surfaces 71 and 72 formed on both sides in the width direction of the first sipe 61, and an intermediate surface 73 formed between the first inclined surfaces 71 and 72 and the first sipe 61. In the center land 40, an inner end in the tire width direction of the first groove 70 is also terminated at a position where the inner end does not reach the circumferential secondary groove 46, the inner end being one end in the longitudinal direction, similarly to the first sipe 61.

The first sipe 61 is a groove which extends in a linear direction inclined with respect to the tire width direction and has a rectangular shape in a cross section taken along a plane perpendicular to the longitudinal direction of the first sipe 61. The first inclined surface 71, which is one of the two first inclined surfaces 71 and 72, is a surface provided between an opening end on one side in the width direction of the first sipe 61 and a ground contact surface S, the surface having a linear shape in cross section and continuing from the ground contact surface S.

The first inclined surface 71, which is the other of the two first inclined surfaces 71 and 72, is a surface provided between an opening end on the other side in the width direction of the first sipe 61 and the ground contact surface S, the surface having a linear shape in cross section and continuing from the ground contact surface S. Each of the two first inclined surfaces 71 and 72 has a plurality of surfaces distorted in such a manner that an inclination angle with respect to the ground contact surface gradually changes along the longitudinal direction of the first groove 70, the plurality of surfaces being connected via ridge lines M1, M2, and M3 each located in the middle in the longitudinal direction of the first groove 70. On the other hand, the first inclined surfaces 71 and 72 may each have a configuration in which a plurality of planar regions are connected via a ridge line at a middle position in the longitudinal direction of the first groove 70. Alternatively, the first inclined surfaces 71 and 72 each may be formed of only one plane.

As illustrated in FIG. 4, an inclination angle θ1 of the first inclined surface 71, which is one of the first inclined surfaces, with respect to the ground contact surface S is larger than an inclination angle θ2 of the first inclined surface 72, which is the other of the first inclined surfaces, with respect to the ground contact surface S.

The intermediate surface 73 is a flat surface which is formed between each of the two first inclined surfaces 71 and 72 and the first sipe 61 and is substantially parallel to the ground contact surface S. Therefore, the inclination angle of the intermediate surface 73 with respect to the ground contact surface S is 0 degrees. The intermediate surface 73 is formed to surround the opening end of the first sipe 61 when viewed from the outer side in the tire radial direction. Therefore, the intermediate surface 73 includes a rectangular region 74 formed between the first inclined surface 71, which is one of the first inclined surfaces, and the opening end of the first sipe 61, and a rectangular region 75 formed between the first inclined surface 72, which is the other of the first inclined surfaces, and the opening end of the first sipe 61. A wall surface 76 is connected to a portion sandwiched between leading edges of the two first inclined surfaces 71 and 72 so as to rise from a leading edge of the intermediate surface 73 toward the ground contact surface S.

Therefore, one end in the longitudinal direction of the first groove 70 is a tapered shape when viewed from the ground contact surface S side. The width of each of the first inclined surfaces 71 and 72 decreases toward one end in the longitudinal direction of the first groove 70, when the first groove 70 is viewed from the ground contact surface S side. In addition, the first sipe 61 is positioned offset to one side (left side in FIG. 4) in the width direction of the first groove 70, when the first groove 70 is viewed from the ground contact surface S side.

The two first inclined surfaces 71 and 72 are two inclined surfaces formed on both sides in the width direction of the first sipe 61, and the intermediate surface 73 is formed on both sides of the first sipe 61 in the width direction of the first groove 70. This can improve the durability of a mold even when blast cleaning involving blowing out high-pressure gas is applied to the mold forming a shape of the tire 1, and improve the drainage properties of the tire 1, as described later.

Note that in the first groove 70, the intermediate surface 73 is formed on both sides in the width direction of the first sipe 61, but it is only required that the intermediate surface is formed on at least one side in the width direction of the first sipe 61 positioned offset in the first groove 70, and therefore, the intermediate surface on the other side in the width direction may be omitted.

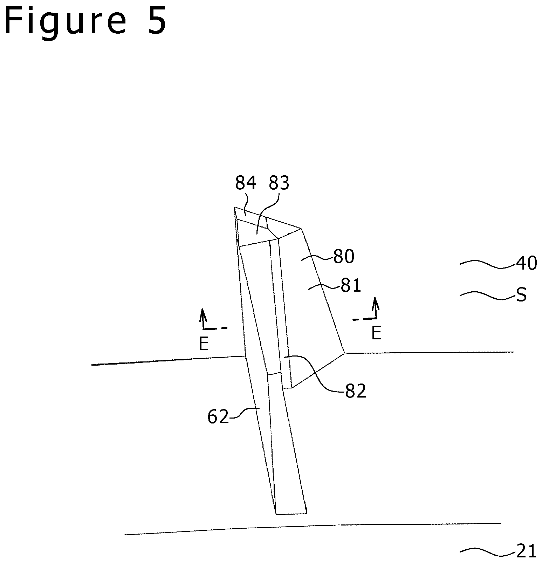

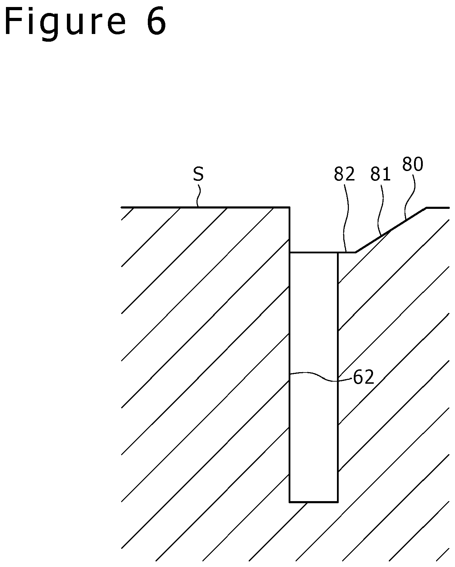

FIG. 5 is an enlarged perspective view when a portion D of FIG. 2 is viewed from an end on a circumferential primary groove 21 side of a second groove 80. FIG. 6 is a diagram illustrating a cross section taken along a line E-E of FIG. 5.

The second sipe 62 is included in the second groove 80 extending in the direction inclined with respect to the tire width direction. The second groove 80 extends substantially parallel to the first groove 70. In the second groove 80, an opening end when viewed from the outer side in the tire radial direction is tapered in a substantially triangular shape. The second groove 80 includes the second sipe 62, a second inclined surface 81 formed on one side in the width direction of the second sipe 62, and an intermediate surface 82 formed between the second inclined surface 81 and the second sipe 62. In the center land 40, an inner end in the tire width direction of the second groove 80 is also terminated at a position where the inner end does not reach the circumferential secondary groove, the inner end being one end in the longitudinal direction, similarly to the second sipe 62.

As illustrated in FIG. 2, the second sipe 62 extends in the linear direction inclined with respect to the tire width direction. The second inclined surface 81 is a surface provided between an opening end on one side in the width direction of the second sipe 62 and the ground contact surface S, the surface having a linear shape in cross section and continuing from the ground contact surface S. The second inclined surface 81 is a surface distorted in such a manner that an inclination angle with respect to the ground contact surface S gradually changes along the longitudinal direction of the second groove 80. The second inclined surface 81 may have a configuration in which a plurality of planes are connected via ridge lines at a plurality of positions in the longitudinal direction of the second groove 80, similarly to the first inclined surfaces 71 and 72. Alternatively, the second inclined surface 81 may be formed of only one plane.

The intermediate surface 82 is a flat surface substantially parallel to the ground contact surface S, which is formed between the second inclined surface 81 and the second sipe 62 and whose inclination angle with respect to the ground contact surface S is 0 degrees. The intermediate surface 82 is a rectangular region connecting an opening end on one side in the width direction of the second sipe 62 and the second inclined surface 81 when viewed from the outer side in the tire radial direction. A wall surface 84 rising along the tire radial direction toward the ground contact surface S is connected to a leading edge of the second sipe 62 via a planar region 83 which is substantially parallel to the ground contact surface S.

Therefore, one end in the longitudinal direction of the second groove 80 is formed into a tapered shape when viewed from the ground contact surface S side. The width of the second inclined surface 81 decreases toward one end in the longitudinal direction of the second groove 80, when the second groove 80 is viewed from the ground contact surface S side. This also improves the durability of a mold even when blast cleaning involving blowing out high-pressure gas is applied to the mold forming a shape of the tire 1, and improves the drainage properties of the tire 1, as in the case of the first groove 70.

A third groove 90 formed on one side in the tire width direction of the mediate land 41, which is one of the mediate lands, includes a third sipe 63, an inclined surface formed on only one side in the width direction of the third sipe 63, and an intermediate surface between the third sipe 63 and the inclined surface, similarly to the second groove 80 illustrated in FIGS. 5 and 6.

A fifth groove 92 formed on one side in the tire width direction of the mediate land 42, which is the other of the mediate lands, includes a fifth sipe 65, two inclined surfaces formed on both sides in the width direction of the fifth sipe 65, and an intermediate surface between the fifth sipe and each inclined surface, similarly to the first groove 70 illustrated in FIGS. 3 and 4.

A sixth groove 93 formed on the other side in the tire width direction of the mediate land 42, which is the other of the mediate lands, includes a sixth sipe 66, an inclined surface formed on only one side in the width direction of the sixth sipe 66, and an intermediate surface between the sixth sipe 66 and the inclined surface.

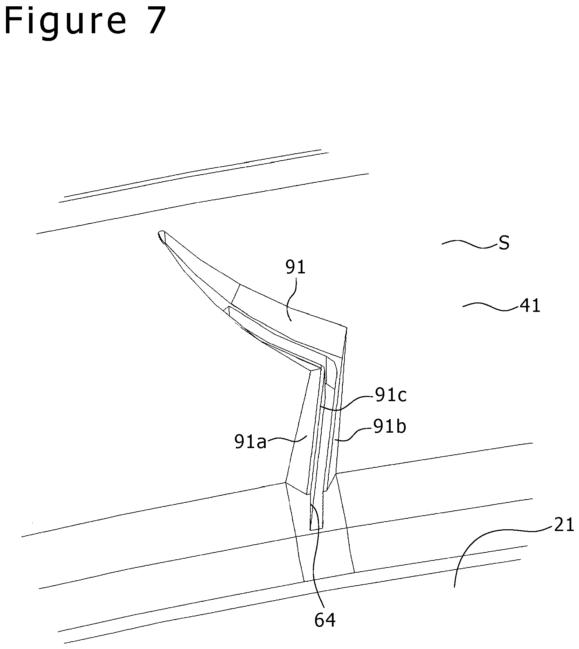

FIG. 7 is an enlarged perspective view of a portion F of Fig. 1. A fourth groove 91 is formed on the other side in the tire width direction of the mediate land 41, which is one of the mediate lands. In the fourth groove 91, an opening end is formed into a substantial V shape with a tapered end when viewed from the outer side in the tire radial direction. The fourth sipe 64 is formed along the longitudinal direction of the fourth groove 91. Thus, the fourth sipe 64 is formed into a substantial V shape when viewed from the outer side in the tire radial direction. In addition, the fourth groove 91 includes the fourth sipe 64, two fourth inclined surfaces 91a and 91b formed on both sides in the width direction of the fourth sipe 64, and an intermediate surface 91c formed between each of the fourth inclined surfaces 91a and 91b and the fourth sipe 64. The fourth groove 91 has the same configuration as the first groove 70 illustrated in FIGS. 3 and 4 except that the overall shape is a substantial V shape.

In a method of manufacturing the tire 1 including the above-described tread 10, intermediary bodies of the tread 10, the carcass, and the beads are formed of tire raw materials, and then a green tire which is an unvulcanized tire is molded by using the formed intermediary bodies in combination. The tire 1 having a predetermined shape is vulcanization-molded by heating and pressing the green tire using a tire vulcanization mold. At this time, in the tire vulcanization mold, a projection having a shape conforming to a groove shape is previously formed in a portion where a groove having a sipe is formed.

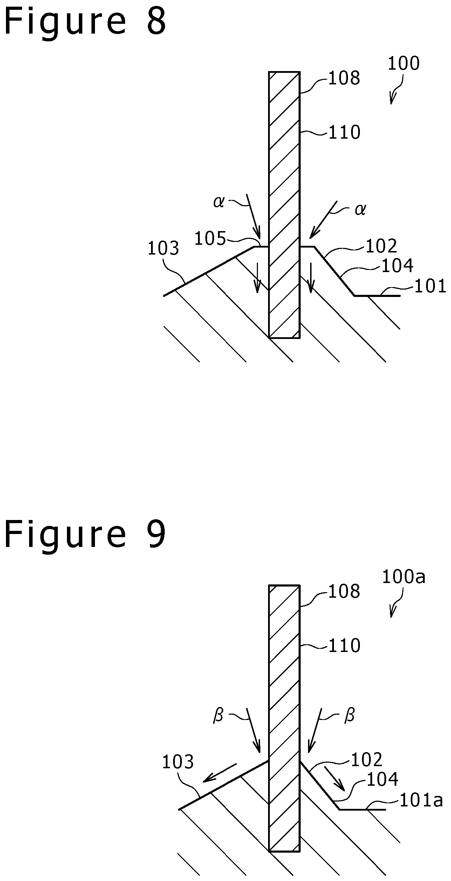

FIG. 8 is a schematic sectional view of a portion forming the first groove 70 of FIG. 3 in a tire vulcanization mold 100 for forming the tread 10 of the tire 1. In the case where the first groove 70 having the intermediate surface 73 on both sides in the width direction of the first sipe 61 is formed as illustrated in FIG. 3, the tire vulcanization mold 100 partially illustrated in FIG. 8 is used. In the mold 100, a plate 110 forming a projection 108 is embedded and fixed to a crest of a ridge 102 formed in a main body 101 of the mold 100, and in the crest of the ridge 102, a top surface 105 is provided between inclined surfaces 103 and 104 and the plate 110, the top surface 105 corresponding to the intermediate surface 73 (FIG. 3) and being substantially perpendicular to side surfaces of the plate 110. For example, the plate 110 made of a stainless alloy is partially embedded and fixed to the main body 101 of the mold made of an aluminum alloy so as to project from an inner surface of the main body 101.

In the tire vulcanization mold 100, the ridge including the top surface, and the plate are also formed in a portion corresponding to each of the second to sixth grooves 80, 90, 91, 92, and 93. In the tire vulcanization mold 100, a cross-sectional shape corresponding to each of the fourth groove 91 and the fifth groove 92 has the same shape as that illustrated in FIG. 8. In the tire vulcanization mold 100, a shape corresponding to each of the second groove 80, the third groove 90, and the sixth groove 93 has the same shape as a shape where one of the two inclined surfaces 103 and 104 of the ridge 102 and the top surface between the one inclined surface and the plate 110 are omitted from the shape illustrated in FIG. 8.

By manufacturing the tire 1 using such a tire vulcanization mold 100, it is possible to form, in the tread 10 of the tire 1, a groove having an intermediate surface between a sipe and an inclined surface, the groove corresponding to the plate 110 and the ridge 102.

According to the above-described tire 1, in the tire vulcanization mold 100 for forming the shape of the tire 1, in the case where the projection 108 for forming a sipe and the main body 101 for forming a portion including an inclined surface of a groove are formed of different members, the top surface 105 is provided at a portion in the main body 101 coming in contact with the projection 108, the top surface 105 corresponding to an intermediate surface and coming in contact with the projection 108 at an angle close to a right angle to the projection 108. Therefore, when blast cleaning involving blowing out high-pressure gas is applied to the tire vulcanization mold 100, the main body 101 can be prevented from being deformed and turned up from the projection 108 even when high-pressure air which is gas is blown to the main body 101 in the vicinity of the projection 108.

For example, the tire vulcanization mold 100 may be cleaned by dry-ice cleaning, which is one kind of blast cleaning. In the dry-ice cleaning, the tire vulcanization mold 100 is cleaned by blasting, with high-pressure air, dry-ice particles having relatively low hardness to an inner surface of the tire vulcanization mold 100. In this case, the high-pressure air and the dry-ice particles are blown between the main body 101 and the plate 110 of the mold 100 in directions of arrows α in FIG. 8. At this time, the top surface 105 of the ridge 102 contacts the side surfaces of the plate 110 forming the projection 108 at an angle smaller than that without the top surface 105, e.g., at substantially a right angle. Therefore, a force is likely to act on the top surface 105 in the outward direction (downward side in FIG. 8) perpendicular to the top surface 105, and the high-pressure air is unlikely to enter a gap between the top surface 105 and the plate 110. Accordingly, the main body 101 can be prevented from being deformed and turned up from the projection 108. As a result, the durability of the tire vulcanization mold 100 can be improved. In addition, a water accommodating region in the groove of the tire 1 is increased by the formation of the intermediate surface, whereby the drainage properties during use of the tire can be improved.

FIG. 9 is a schematic sectional view of a portion forming a groove in a tire vulcanization mold 100a for forming a tread of a tire according to a comparative example. In the tire according to the comparative example, in the groove having a sipe, an intermediate surface is not formed between a sipe opening end and an inclined surface continuing from the ground contact surface. Therefore, in the tire vulcanization mold 100a, a top surface substantially perpendicular to side surfaces of a plate 110 is not formed between a ridge 102 of a main body 101a and the plate 110 fixed to a crest of the ridge 102. Accordingly, inclined surfaces 103 and 104 of the ridge 102 and the side surfaces of a projection 108 formed by the plate 110 contact each other at an angle significantly greater than 90 degrees on the interior space side of the mold 100a. Therefore, in the case where the high-pressure air and the dry-ice particles are blown in directions of arrows β in FIG. 9, the high-pressure air is likely to enter a gap between the inclined surfaces 103 and 104 of the ridge 102 and the plate 110. Accordingly, when the blowing time of high-pressure air is increased due to the increase of the cleaning time for the mold 100a, the main body 101a of the mold 100a may be deformed and turned up from the projection 108. This may reduce the durability of the tire vulcanization mold 100a. According to the embodiment, this disadvantage can be eliminated.

In the embodiment, for example, one end in the longitudinal direction of the first groove 70 including the first sipe 61 terminates within the corresponding land 40, and one end in the longitudinal direction of the first groove 70 is formed into a tapered shape when viewed from the ground contact surface S side. The width of each of the inclined surfaces 71 and 72 decreases toward one end in the longitudinal direction of the first groove 70, when the first groove 70 is viewed from the ground contact surface S side. In the configuration, in the mold for forming the first groove 70, the inclination angle with respect to the tire radial direction of the inclined surfaces 103 and 104 of the ridge 102 is reduced at a portion corresponding to one end in the longitudinal direction of the first groove 70. In this case, when there is no intermediate surface between the inclined surfaces 103 and 104 and the first sipe 61, the corresponding ridge 102 of the mold 100 is likely to be deformed and turned up from the projection 108. Therefore, the formation of the intermediate surface 73 in the embodiment can provide a significant effect of improving the durability of the mold 100.

In addition, in the embodiment, the first sipe 61 is positioned offset to one side (left side in FIG. 4) in the width direction of the first groove 70, when the first groove 70 is viewed from the ground contact surface S side, and the intermediate surface 73 is formed on at least one side of the first sipe 61 in the width direction of the first groove 70. In this case, in the inclination angles θ1 and θ2 of the inclined surfaces 71 and 72 of the first groove 70 with respect to the ground contact surface S, the angle θ1 of the inclined surface 71 on one side in the width direction of the first groove 70 is larger than the angle θ2 of the inclined surface 72 on the other side in the width direction of the first groove 70. In this case, when there is no intermediate surface between the inclined surface 71 on one side in the width direction of the first groove 70 and the first sipe 61, the corresponding main body 101 of the mold 100 is likely to be deformed and turned up from the projection 108. Therefore, the formation of the intermediate surface in the embodiment can provide a significant effect of improving the durability of the mold 100.

When the inclination angle of the inclined surface of each of the grooves 70, 80, 90, 91, 92, and 93 with respect to the ground contact surface is equal to or larger than 20 degrees and below 90 degrees, the main body of the mold is likely to be deformed and turned up from the projection by the blast cleaning. In this way, in the case where the inclination angle of the inclined surface with respect to the ground contact surface is equal to or larger than 20 degrees and below 90 degrees, the formation of the intermediate surface between the inclined surface and the sipe can provide a more significant effect of improving the durability of the mold.

In the above-described embodiment, the case has been described where the intermediate surface of the groove is a surface which is provided between the inclined surface and the sipe of the groove, and whose inclination angle with respect to the ground contact surface S is 0 degrees. On the other hand, the intermediate surface is not limited thereto, and the inclination angle of the intermediate surface with respect to the ground contact surface S may be larger than 0 degrees, and smaller than the inclination angle of the inclined surface with respect to the ground contact surface.

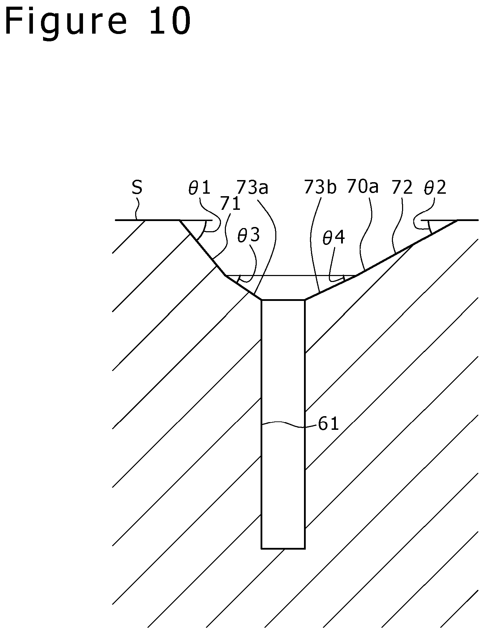

FIG. 10 is a diagram corresponding to FIG.4 according to another example of an embodiment. As illustrated in FIG. 10, in a first groove 70a, intermediate surfaces 73a, 73b are formed between each of two first inclined surfaces 71, 72 and the first sipe 61. The inclination angles θ3 and θ4 of each of the intermediate surfaces 73a, 73b with respect to the ground contact surface S are larger than 0 degrees, and smaller than the inclination angles θ1 and θ2 of the first inclined surfaces 71, 72, to which the intermediate surfaces 73a, 73b are connected, with respect to the ground contact surface S (θ3<θ1, θ4<θ2).

In the above-described embodiment, the case has been described where the intermediate surface is formed in each groove including a sipe formed in each of the center land 40 and the mediate lands 41 and 42, but the grooves each including the intermediate surface may be formed in only some of the plurality of lands.

In the above-described embodiment, the case has been described where each of the plurality of lands is continuously formed into a rib shape along the whole circumference in the tire circumferential direction. On the other hand, each land may be formed into a plurality of blocks partitioned in the tire circumferential direction by the plurality of rug grooves extending from the first side to the second side in the tire width direction.

## Claims

1. A pneumatic tire (1), comprising:
a plurality of lands (40, 41, 42, 43, 44); and
a tread (10) including a sipe (61, 62, 63, 64, 65, 66) formed in at least part of the lands (40, 41, 42, 43, 44),
wherein an inclined surface (71, 72, 81, 91a, 91b) is formed between an opening end on at least one side in a width direction of the sipe (61, 62, 63, 64, 65, 66) and a ground contact surface (S), the inclined surface (71, 72, 81, 91a, 91b) having a linear shape in a cross section taken along a plane perpendicular to the longitudinal direction of the sipe (61, 62, 63, 64, 65, 66), and continuing from the ground contact surface (S), and
an intermediate surface (73, 73a, 73b, 82, 91c) is formed between the inclined surface (71, 72, 81, 91a, 91b) and the sipe (61, 62, 63, 64, 65, 66), the intermediate surface (73, 73a, 73b, 82, 91c) having an inclination angle with respect to the ground contact surface (S) of 0 degrees or having an inclination angle with respect to the ground contact surface (S) that is smaller than an inclination angle of the inclined surface (71, 72, 81, 91a, 91b) with respect to the ground contact surface (S) and **characterised in that**
the one end in the longitudinal direction of a groove (70, 70a, 80, 90, 91, 92, 93) including the sipe (61, 62, 63, 64, 65, 66) is formed into a tapered shape when viewed from the ground contact surface (S) side, and a width of the inclined surface (71, 72, 81, 91a, 91b) is reduced toward the one end in the longitudinal direction of the groove (70, 70a, 80, 90, 91, 92, 93) when the groove (70, 70a, 80, 90, 91, 92, 93) is viewed from the ground contact surface (S) side.

2. The pneumatic tire (1) according to claim 1, wherein
one end in a longitudinal direction of a groove (70, 70a, 80, 90, 91, 92, 93) including the sipe (61, 62, 63, 64, 65, 66), the inclined surface (71, 72, 81, 91a, 91b) and the intermediate surface (73, 73a, 73b, 82, 91c), terminates within the land (40, 41, 42).

3. The pneumatic tire (1) according to claim 1, wherein
when a groove (70, 70a, 90, 91, 92, 93) including the sipe (61, 63, 64, 65, 66), the inclined surface (71, 72, 91a, 91b) and the intermediate surface (73, 73a, 73b, 91c) is viewed from the ground contact surface (S) side, the sipe (61, 63, 64, 65, 66) is positioned offset to one side in a width direction of the groove (70, 70a, 90, 91, 92, 93), the inclined surface (71, 72, 91a, 91b) includes two inclined surfaces (71, 72, 91a, 91b) formed on both sides in a width direction of the sipe (61, 63, 64, 65, 66), and the intermediate surface (73, 73a, 73b, 91c) is formed on at least one side of the sipe (61, 63, 64, 65, 66) in the width direction of the groove (70, 70a, 90, 91, 92, 93).

## Patentansprüche

1. Ein Luftreifen (1), umfassend:
eine Mehrzahl von Laufflächen (40, 41, 42, 43, 44); und
ein Profil (10) einschließlich einer Lamelle (61, 62, 63, 64, 65, 66), die in zumindest einem Teil der Laufflächen (40, 41, 42, 43, 44) ausgebildet ist,
wobei eine geneigte Fläche (71, 72, 81, 91a, 91b) zwischen einem Öffnungsende an wenigstens einer Seite in Breitenrichtung der Lamelle (61, 62, 63, 64, 65, 66) und einer Bodenkontaktfläche (S) ausgebildet ist, wobei die geneigte Fläche (71, 72, 81, 91a, 91b) eine lineare Form in einem Querschnitt aufweist, der entlang einer Ebene senkrecht zur Längsrichtung der Lamelle (61, 62, 63, 64, 65, 66) verläuft, und sich von der Bodenaufstandsfläche (S) fortsetzt, und
eine Zwischenfläche (73, 73a, 73b, 82, 91c) zwischen der geneigten Fläche (71, 72, 81, 91a, 91b) und der Lamelle (61, 62, 63, 64, 65, 66) ausgebildet ist, wobei die Zwischenfläche (73, 73a, 73b, 82, 91c) einen Neigungswinkel von 0 Grad relativ zur Bodenkontaktfläche (S) aufweist oder einen Neigungswinkel relativ zur Bodenkontaktfläche (S) hat, der kleiner ist als der Neigungswinkel der geneigten Fläche (71, 72, 81, 91a, 91b) relativ zur Bodenkontaktfläche (S),
und **dadurch gekennzeichnet ist, dass**
das eine Ende in Längsrichtung einer Nut (70, 70a, 80, 90, 91, 92, 93), die die Lamelle (61, 62, 63, 64, 65, 66) einschließt, eine sich verjüngende Form aufweist, wenn sie von der Seite der Bodenkontaktfläche (S) aus betrachtet wird,
und eine Breite der geneigten Fläche (71, 72, 81, 91a, 91b) zu dem einen Endes in Längsrichtung der Nut (70, 70a, 80, 90, 91, 92, 93) hin abnimmt, wenn die Nut (70, 70a, 80, 90, 91, 92, 93) von der Bodenkontaktfläche (S) aus betrachtet wird.

2. Der Luftreifen (1) nach Anspruch 1,
wobei ein Ende in Längsrichtung einer Nut (70, 70a, 80, 90, 91, 92, 93), die die Lamelle (61, 62, 63, 64, 65, 66), die geneigte Fläche (71, 72, 81, 91a, 91b) und die Zwischenfläche (73, 73a, 73b, 82, 91c) enthält, innerhalb der Lauffläche (40, 41, 42) endet.

3. Der Luftreifen (1) nach Anspruch 1,
wobei wenn eine Nut (70, 70a, 90, 91, 92, 93), die die Lamelle (61, 63, 64, 65, 66), die geneigte Fläche (71, 72, 91a, 91b) und die Zwischenfläche (73, 73a, 73b, 91c) enthält, von der Bodenkontaktfläche (S) aus betrachtet wird, die Lamelle (61, 63, 64, 65, 66) in Breitenrichtung der Nut (70, 70a, 90, 91, 92, 93) zu einer Seite hin versetzt positioniert ist, die geneigte Fläche (71, 72, 91a, 91b) zwei geneigte Flächen (71, 72, 91a, 91b) umfasst, die auf beiden Seiten in Breitenrichtung der Lamelle (61, 63, 64, 65, 66) ausgebildet sind, und die Zwischenfläche (73, 73a, 73b, 91c) auf zumindest einer Seite der Lamelle (61, 63, 64, 65, 66) in Breitenrichtung der Nut (70, 70a, 90, 91, 92, 93) ausgebildet ist.

## Revendications

1. Pneu (1), comprenant :
une pluralité de zones pleines (40, 41, 42, 43, 44) ; et
une bande de roulement (10) incluant une lamelle (61, 62, 63, 64, 65, 66) formée dans au moins une partie des zones pleines (40, 41, 42, 43, 44),
une surface inclinée (71, 72, 81, 91a, 91b) étant formée entre une extrémité d'ouverture située sur au moins un côté en direction de la largeur de la lamelle (61, 62, 63, 64, 65, 66), et une surface de contact au sol (S), ladite surface inclinée (71, 72, 81, 91a, 91b) présentant une forme linéaire en coupe transversale selon un plan perpendiculaire à la direction longitudinale de la lamelle (61, 62, 63, 64, 65, 66), et se prolongeant à partir de la surface de contact au sol (S),
une surface intermédiaire (73, 73a, 73b, 82, 91 c) étant formée entre la surface inclinée (71, 72, 81, 91a, 91b) et la lamelle (61, 62, 63, 64, 65, 66), ladite surface intermédiaire (73, 73a, 73b, 82, 91c) présentant un angle d'inclinaison égal à 0 degré par rapport à la surface de contact au sol (S), ou un angle d'inclinaison par rapport à la surface de contact au sol (S) inférieur à un angle d'inclinaison de la surface inclinée (71, 72, 81, 91a, 91b),
et **caractérisé en ce que :**
l'extrémité dans la direction longitudinale d'une rainure (70, 70a, 80, 90, 91, 92, 93) incluant la lamelle (61, 62, 63, 64, 65, 66) est configurée en forme effilée lorsqu'elle est observée depuis la surface de contact au sol (S), et une largeur de la surface inclinée (71, 72, 81, 91a, 91b) est réduite en direction de ladite extrémité en direction longitudinale de la rainure (70, 70a, 80, 90, 91, 92, 93) lorsque la rainure (70, 70a, 80, 90, 91, 92, 93) est observée depuis la surface de contact au sol (S).

2. Pneu (1) selon la revendication 1, dans lequel
une extrémité dans une direction longitudinale d'une rainure (70, 70a, 80, 90, 91, 92, 93) incluant la lamelle (61, 62, 63, 64, 65, 66), la surface inclinée (71, 72, 81, 91a, 91b) et la surface intermédiaire (73, 73a, 73b, 82, 91c), se termine à l'intérieur de la zone pleine (40, 41, 42).

3. Pneu (1) selon la revendication 1, dans lequel,
lorsqu'une rainure (70, 70a, 90, 91, 92, 93) incluant la lamelle (61, 63, 64, 65, 66), la surface inclinée (71, 72, 91a, 91b) et la surface intermédiaire (73, 73a, 73b, 91c) est observée depuis la surface de contact au sol (S), la lamelle (61, 63, 64, 65, 66) est positionnée de manière décalée vers un côté dans une direction de la largeur de la rainure (70, 70a, 90, 91, 92, 93), la surface inclinée (71, 72, 91a, 91b) comprenant deux surfaces inclinées (71, 72, 91a, 91b) formées des deux côtés dans une direction de la largeur de la lamelle (61, 63, 64, 65, 66), et la surface intermédiaire (73, 73a, 73b, 91c) est formée sur au moins un côté de la lamelle (61, 63, 64, 65, 66) dans la direction de la largeur de la rainure (70, 70a, 90, 91, 92, 93).
